# EUROPÄISCHE PATENTSCHRIFT

(11) **EP 2 364 459 B1**
(45) Veröffentlichungstag und Bekanntmachung des Hinweises auf die Patenterteilung: **22.07.2015**
(21) Anmeldenummer: 09752136.3
(22) Anmeldetag: 26.10.2009
(51) Int. Cl.: G02F 1/163

(54) **AUFBAU UND VERFAHREN ZUM ANPASSEN DER POLARITÄT EINER LEISTUNGSQUELLE AN EINE ELEKTROCHROME VORRICHTUNG**
ASSEMBLY AND METHOD FOR ADAPTING THE POLARITY OF A POWER SOURCE TO AN ELECTROCHROMIC DEVICE
STRUCTURE ET PROCÉDÉ POUR ADAPTER LA POLARITÉ D'UNE SOURCE DE PUISSANCE À UN SYSTÈME ÉLECTROCHROMIQUE

(30) Priorität: 10.12.2008 DE 102008061403
(43) Veröffentlichungstag der Anmeldung: 14.09.2011
(73) Patentinhaber: Sage Electrochromics, Inc., Faribault, MN 55021 (US)
(72) Erfinder: LETOCART, Philippe, B-4730 Raeren (BE)
(74) Vertreter: Lendvai, Tomas
(86) Internationale Anmeldenummer: PCT/EP2009/064059
(87) Internationale Veröffentlichungsnummer: WO 2010/066499

(56) Entgegenhaltungen:
- EP-A1- 1 517 293
- EP-A2- 0 496 155

## Beschreibung

Die Erfindung liegt auf dem technischen Gebiet der elektrochromen Vorrichtungen und betrifft einen Aufbau und ein Verfahren zum Anpassen der Polarität einer elektrischen Leistungsquelle an die Polarität einer elektrochromen Vorrichtung.

Elektrochrome Vorrichtungen, beispielsweise elektrochrome Verglasungen, sind als solche wohlbekannt und bereits in vielfältiger Weise in der Patentliteratur beschrieben. Lediglich beispielhaft sei auf die europäischen Patente EP 0338876, EP 0408427, EP 0628849 und das US-Patent 5,985,486 verwiesen. Elektrochrome Verglasungen werden insbesondere in Gebäuden und Fahrzeugen eingesetzt, um durch eine unterschiedliche optische Transparenz die Menge einfallenden Lichts stufenlos zu regeln.

In den Druckschriften DE 197 06 918 A1 oder EP 691 12 159 T2 wird jeweils ein Aufbau und ein Verfahren zur Ansteuerung einer elektrochromen Vorrichtung offenbart. In beiden genannten Verfahren werden Strom und/oder Spannung am elektrochromen Element gemessen, wozu ein entsprechendes Messgerät im zugehörigen Aufbau enthalten ist.

Wie insbesondre aus den genannten Druckschriften hervorgeht, umfassen elektrochrome Verglasungen wenigstens ein transparentes Substrat, beispielsweise Glas, auf dem eine Schicht aus einem elektrisch leitfähigen Material aufgebracht ist, und mindestens eine Schicht aus einem elektrochromen Material, beispielsweise Wolframoxid, das in der Lage ist, reversibel Kationen einzulagern. Wesentlich hierbei ist, dass verschiedene Oxidationszustände des elektrochromen Materials, die dem ein- bzw. ausgelagerten Zustand der Kationen entsprechen, eine unterschiedliche Färbung haben, wobei einer dieser Zustände in der Regel transparent ist. Durch Anlegen von elektrischen Spannungen verschiedener Polarität kann die Ein- bzw. Auslagerung von Kationen gesteuert werden, um hierdurch eine optische Transparenz der elektrochromen Verglasung gezielt zu beeinflussen. Typischer Weise enthalten elektrochrome Vorrichtungen weiterhin eine ionenleitfähige Schicht, beispielsweise eine Polymerschicht oder eine anorganische Schicht (z. B. eine keramische Schicht aus Siliziumoxid, Tantaloxid oder Hafniumoxid), sowie eine Gegenelektrode, beispielsweise eine Schicht aus Nickeloxid, Iridiumoxid oder Vanadiumoxid.

Demnach haben elektrochrome Verglasungen hinsichtlich der Polarität der anzulegenden Spannung eine vom jeweiligen Aufbau abhängende, spezifische Anschlussbelegung, im Weiteren als "Polarität" bezeichnet, da nur mit entsprechend gepolten Spannungen die elektrochemischen Vorgänge zum Ein- bzw. Auslagern von Kationen in gewünschter Weise bewirkt werden können. Elektrochrome Verglasungen müssen somit an eine geeignet bzw. richtig gepolte Spannungsquelle angeschlossen werden. Da die maximal zulässige Spannung zum Vermindern der optischen Transparenz oftmals höher ist als zum Erhöhen der optischen Transparenz, kommt hinzu, dass bei falsch gepolten Spannungsquellen eine Schädigung bzw. vorzeitige Alterung der elektrochromen Vorrichtung wahrscheinlich ist, wenn eine unzulässig hohe Spannung angelegt wird.

Um das Problem der Verbindung mit einer falsch gepolten Spannungsquelle zu vermeiden, ist es bekannt, die Anschlüsse der elektrochromen Vorrichtung mit einer mechanischen Verpolsicherung zu versehen, beispielsweise ein Stecker, dessen Kupplung so gestaltet ist, dass sie nur mit einer richtig gepolten Spannungsquelle verbunden werden kann. Jedoch kann in der Praxis, beispielsweise bei der Installation elektrochromer Verglasungen in Gebäuden, eine Situation auftreten, bei der ein den Stecker tragendes Anschlusskabel verlängert oder verkürzt werden muss, so dass es erforderlich ist, den Stecker abzumontieren. Nach erneuter Montage des Steckers am Anschlusskabel besteht wiederum die Gefahr der Verbindung mit einer falsch gepolten Spannungsquelle, da eine falsche Montage des Steckers nicht ausgeschlossen werden kann.

Demgegenüber besteht die Aufgabe der vorliegenden Erfindung darin, eine Möglichkeit zu schaffen, in der täglichen Praxis eine elektrische Verbindung einer elektrochromen Verglasung mit einer falsch gepolten Spannungsquelle zuverlässig und sicher zu vermeiden.

Diese und weitere Aufgaben werden nach dem Vorschlag der Erfindung durch einen Aufbau und ein Verfahren zum Anpassen der Polarität einer elektrischen Leistungsquelle an die Polarität einer elektrochromen Vorrichtung gelöst. Vorteilhafte Ausgestaltungen der Erfindung sind durch die Merkmale der Unteransprüche angegeben.

EP0496155 offenbart eine elektrochrome Vorrichtung mit zwei elektrischen Vorrichtungsanschlüsse und einer Schaltungsanordnung. Die Vorrichtungsanschlüssen sind mit einem Netzteil über Schaltkreise verbunden. In EP1517293 wird eine elektrische Ansteuerung von elektrochromen Elementen offenbart. Die Ansteuerung benutzt eine dynamische Änderung der Ansteuerspannung, während die Schaltung nicht nur die Spannungsabfälle in den transparenten Leitschichten sondern auch den Spannungsabfall im Festelektrolyten zwischen den elektrochromen Schichten kompensiert.

Erfindungsgemäß ist ein Aufbau gezeigt, der eine elektrochrome Vorrichtung, beispielsweise eine elektrochrome Verglasung, und eine mit der elektrochromen Vorrichtung elektrisch verbundene Schaltungsanordnung umfasst.

Die elektrochrome Vorrichtung weist zwei elektrische Vorrichtungsanschlüsse auf, wobei eine optische Transparenz der elektrochromen Vorrichtung durch Anlegen von elektrischen Spannungen und/oder elektrischen Strömen an die Vorrichtungsanschlüsse vermindert oder erhöht werden kann. Wie eingangs bereits erläutert, haben die Vorrichtungsanschlüsse bezüglich einer Änderung der optischen Transparenz der elektrochromen Vorrichtung eine vom jeweiligen Aufbau abhängende, spezifische Anschlussbelegung (Polarität) zum Verbinden mit den Polklemmen einer elektrischen Leistungsquelle.

Die elektrochrome Vorrichtung hat einen solchen Aufbau, dass sie bei einer Verminderung der optischen Transparenz (Färbung) als ein Ladungsspeicher (Akkumulator) wirkt, so dass bei Vorliegen einer verminderten optischen Transparenz eine, von der elektrochromen Vorrichtung selbst erzeugte, elektrische Gleichspannung an den beiden Vorrichtungsanschlüssen erzeugt wird.

Die Schaltungsanordnung des erfindungsgemäßen Aufbaus umfasst eine mit den beiden Vorrichtungsanschlüssen verbundene Spannungs-/Strommesseinrichtung zum Messen einer elektrischen Spannung und/oder eines elektrischen Stroms zwischen den beiden Vorrichtungsanschlüssen.

Die Schaltungsanordnung umfasst weiterhin zumindest eine elektrische Leistungsquelle (Spannungs- und/oder Stromquelle), durch die der elektrochromen Vorrichtung elektrische Leistung (Spannung und/oder Strom) zugeführt werden kann. Die Leistungsquelle weist zu diesem Zweck zwei Polklemmen auf, die unter Zwischenschaltung einer steuerbaren Polklemmenwechselschaltung an die beiden Vorrichtungsanschlüsse angeschlossen sind. Die Polklemmenwechselschaltung ermöglicht, dass ein Vorrichtungsanschluss wahlweise mit einer der beiden Polklemmen und zugleich der andere Vorrichtungsanschluss mit der jeweils anderen Polklemme elektrisch leitend verbunden werden kann, so dass die elektrochrome Vorrichtung mit der elektrischen Leistungsquelle in wahlfreier Polung elektrisch leitend verbindbar ist. Vorteilhaft ermöglicht die Polklemmenwechselschaltung auch ein elektrisches Trennen der elektrochromen Vorrichtung von der elektrischen Leistungsquelle.

Ferner umfasst die Schaltungsanordnung eine elektronische Steuereinrichtung zur Steuerung der Polklemmenwechselschaltung. Die Steuereinrichtung ist derart eingerichtet, dass die Vorrichtungsanschlüsse jeweils so mit den Polklemmen verbunden werden, dass die Polarität einer an den Polklemmen gemessenen elektrischen Spannung und/oder eines an den Polklemmen gemessenen elektrischen Stroms einer Polarität der elektrischen Leistungsquelle entspricht. Die elektronische Steuereinrichtung ist zu diesem Zweck mit der Spannungs-/Strommesseinrichtung und der Polklemmenwechselschaltung datentechnisch verbunden.

Der erfindungsgemäße Aufbau ermöglicht somit in vorteilhafter Weise eine Änderung der Polarität einer elektrischen Leistungsquelle, die mit falscher Polung an die Vorrichtungsanschlüsse einer (eine verminderte optische Transparenz aufweisenden) elektrochromen Vorrichtung angeschlossen ist, so dass die optische Transparenz der elektrochromen Vorrichtung in gewünschter Weise steuerbar ist und eine Schädigung durch unzulässig hohe elektrische Spannungen zuverlässig und sicher vermieden werden kann.

Bei einer vorteilhaften Ausgestaltung des erfindungsgemäßen Aufbaus ist die Steuereinrichtung so eingerichtet, dass dann, wenn keine Spannung bzw. Strom zwischen den Vorrichtungsanschlüssen messbar ist, der elektrochromen Vorrichtung für eine wählbare Zeitspanne elektrische Leistung (elektrische Spannung und/oder elektrischer Strom) zugeführt wird.

Weiterhin ist die Steuereinrichtung in dieser Ausgestaltung der Erfindung so eingerichtet, dass:
a) für den Fall, dass nach Ablauf der Zeitspanne eine elektrische Spannung und/oder Strom zwischen den Vorrichtungsanschlüssen gemessen wird, die Vorrichtungsanschlüsse jeweils so mit den Polklemmen verbunden werden, dass eine Polarität der an den Polklemmen gemessenen elektrischen Größe (Spannung und/oder Strom) einer Polarität der elektrischen Leistungsquelle entspricht, und
b) für den Fall, dass nach Ablauf der Zeitspanne weiterhin keine elektrische Spannung und/oder Strom zwischen den Vorrichtungsanschlüssen gemessen wird, die Vorrichtungsanschlüsse jeweils so mit den Polklemmen verbunden werden, dass die Polarität der Polklemmen gegenüber der Polarität der Polklemmen beim Zuführen der elektrischen Leistung umgekehrt wird.

Diese Ausgestaltung der Erfindung ermöglicht somit in vorteilhafter Weise eine Änderung der Polarität einer elektrischen Leistungsquelle, die in falscher Polung an die Vorrichtungsanschlüsse einer (keine verminderte optische Transparenz aufweisenden) elektrochromen Vorrichtung angeschlossen ist, so dass die optische Transparenz der elektrochromen Vorrichtung in gewünschter Weise steuerbar ist und eine Schädigung durch unzulässig hohe elektrische Spannungen zuverlässig und sicher vermieden werden kann.

Bei einer weiteren vorteilhaften Ausgestaltung des erfindungsgemäßen Aufbaus ist die Spannungs-/Strommesseinrichtung in die elektronische Steuereinrichtung integriert, wodurch eine besonders kompakte Schaltungsanordnung ermöglicht ist.

Bei einer technisch einfach zu realisierenden Ausgestaltung der Schaltungsanordnung umfasst die Polklemmenwechselschaltung eine erste Anschlussleitung, durch welche eine erste Polklemme der Leistungsquelle mit einem ersten Vorrichtungsanschluss elektrisch leitend verbindbar ist, sowie eine zweite Anschlussleitung, durch welche eine zweite Polklemme der Leistungsquelle mit einem zweiten Vorrichtungsanschluss elektrisch leitend verbindbar ist. Die Polklemmenwechselschaltung umfasst weiterhin ein erstes Transistorenpaar mit einem ersten Transistor und einem zweiten Transistor, wobei ein Lastpfad des ersten Transistors die erste Anschlussleitung in einen (auf Seite der Polklemme befindlichen) ersten klemmenseitigen Abschnitt und einen (auf Seite des Vorrichtungsanschlusses befindlichen) ersten anschlussseitigen Abschnitt unterteilt und wobei ein Lastpfad des zweiten Transistors die zweite Anschlussleitung in einen zweiten klemmenseitigen Abschnitt und einen zweiten anschlussseitigen Abschnitt unterteilt. Des Weiteren umfasst die Polklemmenwechselschaltung eine erste Brückenleitung, durch welche der erste klemmenseitige Abschnitt der ersten Anschlussleitung mit dem zweiten anschlussseitigen Abschnitt der zweiten Anschlussleitung elektrisch leitend verbindbar ist, sowie eine zweite Brückenleitung, durch welche der zweite klemmenseitige Abschnitt der zweiten Anschlussleitung mit dem ersten anschlussseitigen Abschnitt der ersten Anschlussleitung elektrisch leitend verbindbar ist. Ferner umfasst die Polklemmenwechselschaltung ein zweites Transistorenpaar mit einem dritten Transistor und einem vierten Transistor, wobei ein Lastpfad des dritten Transistors in der ersten Brückenleitung und ein Lastpfad des vierten Transistors in der zweiten Brückenleitung enthalten sind.

In der Polklemmenwechselschaltung sind die Transistoren so verschaltet, dass die erste Polklemme der elektrischen Leistungsquelle über den Lastpfad des ersten Transistors mit dem ersten Vorrichtungsanschluss und die zweite Polklemme über den Lastpfad des zweiten Transistors mit dem zweiten Vorrichtungsanschluss elektrisch leitend verbind- bzw. trennbar sind. Weiterhin sind die erste Polklemme über den Lastpfad des dritten Transistors mit dem zweiten Vorrichtungsanschluss und die zweite Polklemme über den Lastpfad des vierten Transistors mit dem ersten Vorrichtungsanschluss elektrisch leitend verbind- bzw. trennbar.

In der Polklemmenwechselschaltung sind die Steueranschlüsse der Transistoren mit der elektronischen Steuereinrichtung verbunden, wobei es von Vorteil sein kann, wenn die Steueranschlüsse der Transistoren eines Transistorenpaars mit einem gemeinsamen Signalausgang der elektronischen Steuereinrichtung verbunden sind, um auf diese Weise ein Transistorenpaar gemeinsam zu steuern.

Bei einer weiteren vorteilhaften Ausgestaltung des erfindungsgemäßen Aufbaus umfasst dieser eine erste elektrische Leistungsquelle und eine zweite elektrische Leistungsquelle, die jeweils über die Polklemmenwechselschaltung an die Vorrichtungsanschlüsse der elektrochromen Vorrichtung angeschlossen sind, wobei die Polklemmen der beiden Leistungsquellen, gesteuert durch einen Wechselschalter, wahlweise mit den Vorrichtungsanschlüssen verbindbar sind. Hierbei dient die erste Leistungsquelle zum Vermindern der optischen Transparenz der elektrochromen Vorrichtung, während die zweite Leistungsquelle zum Erhöhen der optischen Transparenz der elektrochromen Vorrichtung eingesetzt wird. Von besonderem Vorteil kann es sein, wenn der Wechselschalter mit der elektronischen Steuereinrichtung datentechnisch verbunden und von der Steuereinrichtung steuerbar ist. Weiterhin kann es von Vorteil sein, wenn eine maximale Ausgangsleistung (maximale Spannung bzw. maximaler Strom) wenigstens einer der beiden elektrischen Leistungsquellen durch die elektronische Steuereinrichtung regelbar ist.

Vorzugsweise handelt es sich bei der elektrochromen Vorrichtung um eine (nicht notwendiger Weise gläserne) elektrochrome Verglasung, die mit wenigstens einem transparenten Substrat, beispielsweise Glas, versehen ist.

Die Erfindung erstreckt sich weiterhin auf ein Verfahren zum Anpassen der Polarität einer elektrischen Leistungsquelle an die Polarität einer elektrochromen Vorrichtung.

In dem erfindungsgemäßen Verfahren wird zunächst eine elektrische Spannung und/oder ein elektrischer Strom zwischen Vorrichtungsanschlüssen der elektrochromen Vorrichtung mittels einer Spannungs-/Strommesseinrichtung gemessen. Anschließend wird die Polarität (Vorzeichen) der gemessenen elektrischen Größe (Strom und/oder Spannung) mittels einer elektronischen Steuereinrichtung mit der Polarität der Leistungsquelle verglichen, wobei die Vorrichtungsanschlüsse so mit den Polklemmen verbunden werden, dass eine Polarität der an den Polklemmen gemessenen elektrischen Größe (Strom und/oder Spannung) einer Polarität der elektrischen Leistungsquelle entspricht.

Das erfindungsgemäße Verfahren ermöglicht somit in einfacher und zuverlässiger Weise eine Anpassung der Polarität einer Leistungsquelle an die Polarität einer (eine verminderte optische Transparenz aufweisenden) elektrochromen Vorrichtung.

Bei einer vorteilhaften Ausgestaltung des erfindungsgemäßen Verfahrens wird für den Fall, dass keine Spannung bzw. Strom an den Vorrichtungsanschlüssen messbar ist, der elektrochromen Vorrichtung für eine wählbare Zeitspanne elektrische Leistung (Spannung und/oder Strom) zugeführt. Zudem werden:
a) für den Fall, dass nach Ablauf der Zeitspanne eine elektrische Spannung und/oder ein elektrischer Strom zwischen den Vorrichtungsanschlüssen gemessen wird, die Vorrichtungsanschlüsse jeweils so mit den Polklemmen verbunden, dass eine Polarität der an den Polklemmen gemessenen elektrischen Größe (Spannung und/oder Strom) einer Polarität der elektrischen Leistungsquelle entspricht, und
b) für den Fall, dass nach Ablauf der Zeitspanne keine elektrische Spannung und/oder elektrischer Strom zwischen den Vorrichtungsanschlüssen gemessen wird, die Vorrichtungsanschlüsse jeweils so mit den Polklemmen verbunden, dass die Polarität der Polklemmen gegenüber der Polarität der Polklemmen beim Zuführen der elektrischen Leistung umgekehrt wird.

Diese Ausgestaltung ermöglicht in einfacher Weise eine Anpassung der Polarität einer Leistungsquelle an eine Polarität der (keine verminderte optische Transparenz aufweisenden) elektrochromen Vorrichtung. Die Polarität der zugeführten elektrischen Leistung (Spannung und/oder Strom) kann beliebig gewählt sein. Bei richtig gepolter Leistungsquelle vermindert sich die optische Transparenz der elektrochromen Vorrichtung, so dass eine elektrische Spannung an den Vorrichtungsanschlüssen erzeugt wird, wohingegen sich die optische Transparenz der elektrochromen Vorrichtung bei falsch gepolter Leistungsquelle nicht vermindert und in entsprechender Weise keine Spannung an den Vorrichtungsanschlüssen erzeugt wird. In beiden Fällen kann die richtige Polung der Leistungsquelle aufgrund des verschiedenen Ergebnisses in einfacher Weise erfasst werden.

Die Erfindung erstreckt sich weiterhin auf ein Verfahren zum Betreiben einer elektrochromen Vorrichtung, bei welchem vor einer (insbesondere erstmaligen) Änderung der optischen Transparenz der elektrochromen Vorrichtung mittels einer elektrischen Leistungsquelle ein wie oben beschriebenes Verfahren zum Anpassen der Polarität der elektrischen Leistungsquelle an die Polarität der elektrochromen Vorrichtung ausgeführt wird.

### Kurze Beschreibung der Zeichnung

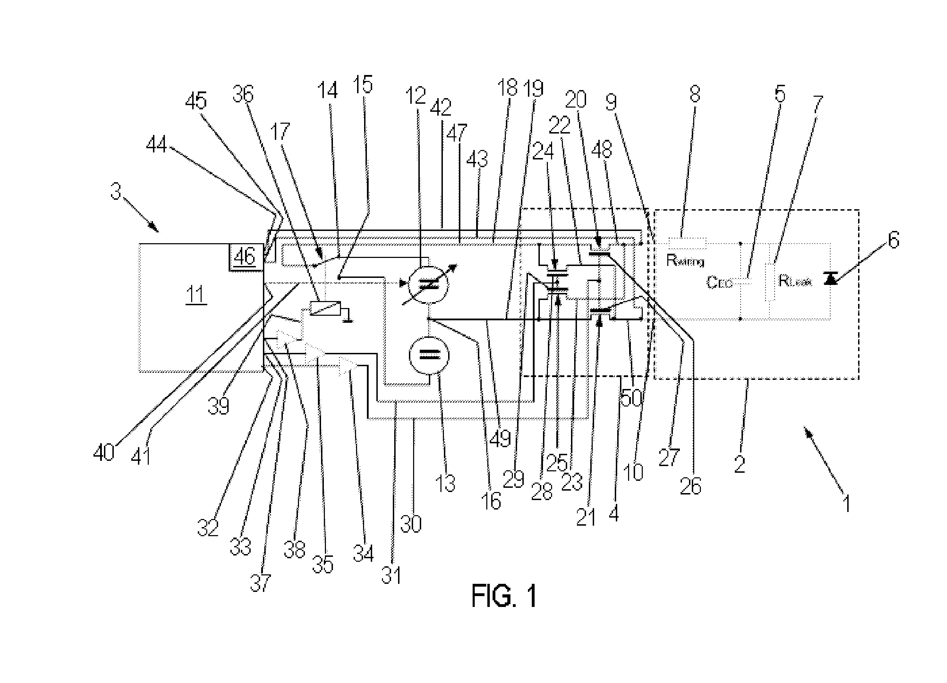

Die Erfindung wird nun anhand eines Ausführungsbeispiels näher erläutert, wobei Bezug auf Figur 1 genommen wird, worin ein erfindungsgemäßer Aufbau veranschaulicht ist.

### Ausführliche Beschreibung der Zeichnung

In Fig. 1 ist ein insgesamt mit der Bezugszahl 1 bezeichneter Aufbau veranschaulicht, der eine elektrochrome Vorrichtung 2 und eine mit der elektrochromen Vorrichtung 2 elektrisch verbundene Schaltungsanordnung 3 umfasst.

Die elektrochrome Vorrichtung 2 ist hier beispielsweise als elektrochrome Verglasung mit wenigstens einem transparenten Substrat (z. B. Glasscheibe) ausgeführt. Eine optische Transparenz der elektrochromen Vorrichtung 2 kann durch Beaufschlagen mit einer elektrischen Spannung und/oder elektrischen Strom geeigneter Größe und Polarität verändert werden, wobei die elektrochrome Vorrichtung 2 bei einer Verminderung der optischen Transparenz wie ein Ladungsspeicher wirkt.

In dem in Fig. 1 gezeigten Aufbau 1 ist die elektrochrome Vorrichtung 2 anhand ihres (gestrichelt umrandeten) Ersatzschaltbilds veranschaulicht. Demnach verfügt die elektrochrome Vorrichtung 2 in ihrer Eigenschaft als Ladungsspeicher über eine elektrische Kapazität 5, die über die beiden Vorrichtungsanschlüsse 9, 10 auf- bzw. entladen werden kann. In Abhängigkeit des konkreten Aufbaus der elektrochromen Vorrichtung 2 kann die Kapazität 5 nur durch Anlegen einer geeignet (richtig) gepolten Spannung aufgeladen werden, was in Fig. 1 durch eine parallel zur Kapazität 5 geschaltete Diode 6 veranschaulicht ist. Insofern müssen die beiden Vorrichtungsanschlüsse 9, 10 entsprechend einer spezifischen Anschlussbelegung mit den Polklemmen einer elektrischen Leistungsquelle verbunden werden, um in gewünschter Weise eine Färbung (Verminderung der optischen Transparenz) oder eine Entfärbung (Erhöhung der optischen Transparenz) der elektrochromen Vorrichtung 2 zu erreichen. Hinsichtlich der ladungsspeichernden Eigenschaft führt eine Färbung der elektrochromen Vorrichtung 2 zu einer elektrischen Aufladung der Kapazität 5, während eine Entfärbung der elektrochromen Vorrichtung 2 zu einer Entladung der Kapazität 5 führt.

Ein parallel zur Kapazität 5 geschalteter Leckwiderstand 7 kennzeichnet eine gewöhnlicher Weise auftretende (geringe) Selbstentladung der elektrochromen Vorrichtung 2 aufgrund von Leck- und Kriechströmen. Ein seriell zur Kapazität 5 geschalteter Anschlusswiderstand 8 kennzeichnet einen elektrischen Widerstand der Leitungen zur Verbindung der Kapazität 5 mit den Vorrichtungsanschlüssen 9, 10.

Lediglich beispielhaft sei angegeben, dass die Kapazität der elektrochromen Verglasung mit einem Kontrast von 20 ca. 300 F/m² betragen kann. Der Leckwiderstand 7 kann für eine Verglasung mit einer Fläche von 1 m² ca. 20 Ohm betragen. Der Anschlusswiderstand 8 kann ca. 0,5 Ohm betragen.

Die Schaltungsanordnung 3 umfasst eine Steuereinrichtung 11 zur Steuerung verschiedener Komponenten der Schaltungsanordnung 3. Sie umfasst weiterhin eine regelbare erste elektrische Leistungsquelle (Spannungs-/Stromquelle) 12 und eine nicht-regelbare zweite elektrische Leistungsquelle (Spannungs-/Stromquelle) 13, durch die der elektrochromen Vorrichtung 2 elektrische Leistung (elektrische Gleichspannung und/oder elektrischer Gleichstrom) zugeführt werden kann. Die beiden Leistungsquellen 12, 13 sind unter Zwischenschaltung einer Polklemmenwechselschaltung 4 wechselweise mit den beiden Vorrichtungsanschlüssen 9, 10 elektrisch leitend verbindbar. Die beiden Leistungsquellen 12, 13 sind jeweils mit zwei Polklemmen versehen, wobei eine gleichnamige Polklemme der beiden Leistungsquellen 12, 13 zu einer gemeinsamen, dritten Polklemme 16 kurzgeschlossen ist. So ist die erste Leistungsquelle 12 mit einer ersten Polklemme 14 und der dritten Polklemme 16, die zweite Spannungsquelle 13 mit einer zweiten Polklemme 15 und der dritten Polklemme 16 versehen. Die erste Leistungsquelle 12 dient zur Verminderung der optischen Transparenz der elektrochromen Vorrichtung 2, während die zweite Leistungsquelle 13 zur Erhöhung der optischen Transparenz der elektrochromen Vorrichtung 2 dient. Die beiden Leistungsquellen 12, 13 weisen zu diesem Zweck eine maximale Gleichspannung bzw. maximalen Gleichstrom auf, die bzw. der an die jeweilige Funktion angepasst ist, wobei eine maximale Gleichspannung bzw. maximaler Gleichstrom der zweiten Leistungsquelle 13 gewöhnlich kleiner als eine maximale Gleichspannung bzw. maximaler Gleichstrom der der ersten Leistungsquelle 12 ist.

Gesteuert durch einen Wechselschalter 17 kann entweder die erste Polklemme 14 der ersten Leistungsquelle 12 oder die zweite Polklemme 15 der zweiten Leistungsquelle 13 über eine erste Anschlussleitung 18 mit dem ersten Vorrichtungsanschluss 9 der elektrochromen Vorrichtung 2 elektrisch verbunden werden. Die (gemeinsame) dritte Polklemme 16 der beiden Leistungsquellen 12, 13 kann über eine zweite Anschlussleitung 19 mit dem zweiten Vorrichtungsanschluss 10 der elektrochromen Vorrichtung 2 elektrisch leitend verbunden werden. Sowohl die erste Anschlussleitung 18 als auch die zweite Anschlussleitung 19 sind Teil der Polklemmenwechselschaltung 4, die in Fig. 1 gestrichelt umrandet dargestellt ist.

Die Polklemmenwechselschaltung 4 umfasst, neben der ersten Anschlussleitung 18 und der zweiten Anschlussleitung 19, ein erstes Transistorenpaar mit einem ersten Transistor 20 und einem zweiten Transistor 21, die jeweils als steuerbare Feldeffekttransistoren ausgeführt sind, wobei jeder Transistor einen Lastpfad (d. h. einen Source- und Drain-Anschluss des Transistors miteinander verbindenden Strompfad) und einen Steueranschluss zur Steuerung des Stromflusses im Lastpfad aufweist. Hierbei unterteilen ein Lastpfad des ersten Transistors 20 die erste Anschlussleitung 18 in einen ersten klemmenseitigen Abschnitt 47 und einen ersten anschlussseitigen Abschnitt 48 und ein Lastpfad des zweiten Transistors 21 die zweite Anschlussleitung 19 in einen zweiten klemmenseitigen Abschnitt 49 und einen zweiten anschlussseitigen Abschnitt 50.

Die Polklemmenwechselschaltung 4 umfasst weiterhin eine erste Brückenleitung 22, durch welche der erste klemmenseitigen Abschnitt 47 mit dem zweiten anschlussseitigen Abschnitt 50 elektrisch leitend verbindbar ist, sowie eine zweite Brückenleitung 23, durch welche der zweite klemmenseitigen Abschnitt 49 mit dem ersten anschlussseitigen Abschnitt 48 elektrisch leitend verbindbar ist. Zudem umfasst die Polklemmenwechselschaltung 4 ein zweites Transistorenpaar mit einem dritten Transistor 24 und einem vierten Transistor 25, die jeweils als steuerbare Feldeffekttransistoren ausgeführt sind, wobei ein Lastpfad des dritten Transistors 24 in der ersten Brückenleitung 22 und ein Lastpfad des vierten Transistors 25 in der zweiten Brückenleitung 23 enthalten sind.

Ein erster Steueranschluss 26 des ersten Transistors 20 und ein zweiter Steueranschluss 27 des zweiten Transistors 21 sind über eine gemeinsame erste Steuerleitung 30 mit einem ersten Signalausgang 32 der Steuereinrichtung 11 verbunden, so dass die Steuereinrichtung 11 unter Zwischenschaltung eines ersten Verstärkers 34 Steuersignale zur gleichzeitigen Steuerung der beiden Transistoren 20, 21 an den ersten Steueranschluss 26 und den zweiten Steueranschluss 27 übermitteln kann. Ein dritter Steueranschluss 28 des dritten Transistors 24 und ein vierter Steueranschluss 29 des vierten Transistors 25 sind über eine gemeinsame zweite Steuerleitung 31 mit einem zweiten Signalausgang 33 der Steuereinrichtung 11 verbunden, so dass die Steuereinrichtung 11 unter Zwischenschaltung eines zweiten Verstärkers 35 Steuersignale gleichzeitig an den dritten Steueranschluss 28 und den vierten Steueranschluss 29 übermitteln kann.

Allgemein kann durch eine entsprechende Ansteuerung eines Steueranschlusses eines Feldeffekttransistors ein elektrischer Strom in dem vom Steueranschluss gesteuerten Lastpfad (gegebenenfalls mit einer verringerten Stromstärke) durchgelassen bzw. mittels Feldeffekt blockiert werden.

Aufgrund der Verschaltung der beiden Transistorenpaare kann durch die Polklemmenwechselschaltung 4 erreicht werden, dass:
a) die, je nach Stellung des Wechselschalters 17 mit der ersten Polklemme 14 oder der zweiten Polklemme 15 verbundene, erste Anschlussleitung 18 mit dem ersten Vorrichtungsanschluss 9 und zugleich die mit der dritten Polklemme 16 verbundene, zweite Anschlussleitung 19 mit dem zweiten Vorrichtungsanschluss 10 elektrisch leitend verbunden sind, wenn der erste Transistor 20 und der zweite Transistor 21 jeweils auf Durchlass geschalten und der dritte Transistor 24 und der vierte Transistor 25 jeweils gesperrt sind; oder
b) die, je nach Stellung des Wechselschalters 17 mit der ersten Polklemme 14 oder der zweiten Polklemme 15 verbundene, erste Anschlussleitung 18 mit dem zweiten Vorrichtungsanschluss 10 und zugleich die mit der dritten Polklemme 16 verbundene, zweite Anschlussleitung 19 mit dem ersten Vorrichtungsanschluss 9 elektrisch leitend verbunden sind, wenn der erste Transistor 20 und der zweite Transistor 21 jeweils gesperrt und der dritte Transistor 24 und der vierte Transistor 25 jeweils auf Durchlass geschalten sind; oder
c) die erste Anschlussleitung 18 und/oder die zweite Anschlussleitung 19 von den beiden Vorrichtungsanschlüssen 9, 10 elektrisch getrennt sind, wenn der erste Transistor 20 und der dritte Transistor 24 und/oder der zweite Transistor 21 und der vierte Transistor 25 jeweils gesperrt sind, zum Beispiel um eine Gleichspannung und/oder einen Gleichstrom an den Vorrichtungsanschlüssen 9, 10 zu messen.

Der Wechselschalter 14 zur Verbindung der ersten Leistungsquelle 12 oder der zweiten Leistungsquelle 13 mit der Polklemmenwechselschaltung 4 kann, gesteuert durch die Steuereinrichtung 11, durch einen auf Masse gelegten Aktuator 36 (beispielsweise Elektromagnet), der über eine dritte Steuerleitung 39 unter Zwischenschaltung eines dritten Verstärkers 38 mit einem dritten Signalausgang 37 der Steuereinrichtung 11 verbunden ist, betätigt werden.

Die regelbare erste Leistungsquelle 12 ist über eine vierte Steuerleitung 41 mit einem vierten Signalausgang (A/D-Ausgang) 40 der Steuereinrichtung 11 datentechnisch verbunden. Die Steuereinrichtung 11 kann Steuersignale erzeugen und am vierten Signalausgang 40 bereitstellen, welche über die vierte Steuerleitung 41 an die erste Leistungsquelle 12 übertragen werden, um eine Maximalspannung bzw. Maximalstrom zu regeln. Durch die Größe der Maximalspannung bzw. Maximalstrom kann die optische Transparenz der elektrochromen Vorrichtung 2 auf einen gewünschten Transparenzwert vermindert werden.

Die Steuereinrichtung 11 ist weiterhin mit einer integrierten Spannungs-/Strommesseinrichtung 46 versehen, die über einen ersten Signaleingang 44 (A/D-Eingang) und eine daran angeschlossene, erste Messleitung 42, sowie über einen zweiten Signaleingang 45 (A/D-Eingang) und eine daran angeschlossene, zweite Messleitung 43 mit den beiden Vorrichtungsanschlüssen 9, 10 der elektrochromen Vorrichtung 2 elektrisch leitend verbunden ist. Die Spannungs-/Strommesseinrichtung 46 kann eine elektrische Gleichspannung und/oder einen elektrischen Gleichstrom (einschließlich Vorzeichen) zwischen den beiden Vorrichtungsanschlüssen 9, 10 messen.

Die elektronische Steuereinrichtung 11 ist beispielsweise als programmierbarer Logikkontroller (Mikroprozessor) ausgebildet, in dem ein maschinenlesbares Programmcode ausführbar ist bzw. ausgeführt wird, der mit Instruktionen versehen ist, durch die steuerbare Komponenten des Aufbaus 1 in gewünschter Weise gesteuert werden. Zudem ist in der elektronischen Steuereinrichtung 11 gespeichert, welchem elektrischen Pol (Plus- oder Minuspol) die erste Polklemme 14, die zweite Polklemme 15 bzw. die dritte Polklemme 16 der beiden Leistungsquellen 12, 13 entsprechen, so dass die Steuereinrichtung 11, je nach Stellung des Wechselschalters 14, mittels der Polklemmenwechselschaltung 4
- wahlweise den ersten Vorrichtungsanschluss 9 mit dem Plus- oder Minuspol der ersten Leistungsquelle 12 und zugleich den zweiten Vorrichtungsanschluss 10 mit dem jeweils anderen Pol der ersten Leistungsquelle 12 oder
- wahlweise den ersten Vorrichtungsanschluss 9 mit dem Plus- oder Minuspol der zweiten Leistungsquelle 13 und den zweiten Vorrichtungsanschluss 10 mit dem jeweils anderen Pol der zweiten Leistungsquelle 13
elektrisch leitend verbinden kann.

In der elektronischen Steuereinrichtung 11 ist ein maschinenlesbares Programmcode implementiert, durch den, insbesondere vor dem erstmaligen elektrischen Verbinden der elektrochromen Vorrichtung 2 mit der ersten Leistungsquelle 12, eine elektrische Gleichspannung (einschließlich deren Vorzeichen) an den beiden Vorrichtungsanschlüssen 9, 10 mittels der Spannungs-/Strommesseinrichtung 46 gemessen wird. Ein Messen der elektrischen Spannung bzw. des elektrischen Stroms erfolgt dann, wenn keine elektrische Leistung der elektrochromen Vorrichtung 2 zugeführt wird.

Für den Fall, dass der Wechselschalter 14 so geschaltet ist, dass die erste Leistungsquelle 12 an die elektrochrome Vorrichtung 2 angeschlossen ist, kann dies dadurch erreicht werden kann, dass die Transistoren gesperrt werden.

Es wird zunächst eine erste Variante betrachtet, bei der die elektrochrome Vorrichtung 2 eine verminderte optische Transparenz hat, so dass eine elektrische Gleichspannung an den beiden Vorrichtungsanschlüssen 9, 10 aufgrund ihrer Eigenschaft als Ladungsspeicher gemessen werden kann.

Nach Messen der an den beiden Vorrichtungsanschlüssen 9, 10 auftretenden Gleichspannung und/oder Gleichstrom wird das Vorzeichen (Polarität) der gemessenen elektrischen Größe mit der Polarität der ersten Leistungsquelle 12 verglichen und die erste Leistungsquelle 12 so mit den Vorrichtungsanschlüssen 9, 10 elektrisch leitend verbunden, dass die Polarität der ersten Leistungsquelle 12 zur Polarität der gemessen elektrischen Größe gleich ist. Wird beispielsweise eine positive Gleichspannung an den Vorrichtungsanschlüssen 9, 10 gemessen, wobei der erste Vorrichtungsanschluss 9 ein höheres Potenzial als der zweite Vorrichtungsanschluss 10 hat, und hat die erste Polklemme 14 ein höheres Potenzial als die dritte Polklemme 15, werden die erste Polklemme 14 mit dem ersten Vorrichtungsanschluss 9 und die dritte Polklemme 16 mit dem zweiten Vorrichtungsanschluss 10 elektrisch leitend verbunden. In der Schaltungsanordnung 3 wird zu diesem Zweck das erste Transistorenpaar mit dem ersten Transistor 20 und dem zweiten Transistor 21 auf Durchlass geschalten, während das zweite Transistorenpaar mit dem dritten Transistor 24 und dem vierten Transistor 25 gesperrt wird. Wird andererseits eine negative Gleichspannung an den Vorrichtungsanschlüssen 9, 10 gemessen, wobei der erste Vorrichtungsanschluss 9 ein niedrigeres Potenzial als der zweite Vorrichtungsanschluss 10 hat, und hat die erste Polklemme 14 ein höheres Potenzial als die dritte Polklemme 15, werden die dritte Polklemme 16 mit dem ersten Vorrichtungsanschluss 9 und die erste Polklemme 14 mit dem zweiten Vorrichtungsanschluss 10 elektrisch leitend verbunden. In der Schaltungsanordnung 3 wird zu diesem Zweck das erste Transistorenpaar mit dem ersten Transistor 20 und dem zweiten Transistor 21 gesperrt, während das zweite Transistorenpaar mit dem dritten Transistor 24 und dem vierten Transistor 25 auf Durchlass geschalten wird.

Es wird nun eine zweite Variante betrachtet, bei der die elektrochrome Vorrichtung 2 keine verminderte optische Transparenz aufweist, so dass keine elektrische Gleichspannung an den beiden Vorrichtungsanschlüssen 9, 10 erzeugt wird.

In diesem Fall wird die erste Leistungsquelle 12, ungeachtet der Polarität ihrer Polklemmen 14, 16, für eine wählbare Zeitspanne mit den beiden Vorrichtungsanschlüssen 9, 10 elektrisch leitend verbunden (im Weiteren zur leichteren Bezugnahme als "Ladeschritt" bezeichnet). Die Höhe der(s) beim Ladeschritt an die beiden Vorrichtungsanschlüsse angelegten Gleichspannung bzw. Gleichstroms ist so gewählt, dass eine maximal zulässige Gleichspannung bzw. Gleichstrom der elektrochromen Vorrichtung 2 nicht überschritten wird.

Anschließend wird die erste Leistungsquelle 12 von der elektrochromen Vorrichtung 2 wieder getrennt, was durch Sperren der Transistoren erreicht werden kann.

Falls nun eine elektrische Gleichspannung bzw. ein Gleichstrom an den beiden Vorrichtungsanschlüssen 9, 10 gemessen wird, wird das Vorzeichen (Polarität) der gemessenen elektrischen Größe mit der Polarität der ersten Leistungsquelle 12 verglichen und die erste Leistungsquelle 12 so mit den Vorrichtungsanschlüssen 9, 10 elektrisch leitend verbunden, dass die Polarität der ersten Leistungsquelle 12 zur Polarität der gemessenen elektrischen Größe gleich ist. Dies kann in der Weise erfolgen, wie oben in Zusammenhang mit der ersten Variante bereits beschrieben wurde. Um unnötige Wiederholungen zu vermeiden, wird auf die dortigen Ausführungen verwiesen. Hierbei entspricht die Polarität der beiden Polklemmen 14, 16 der ersten Leistungsquelle 12 der Polarität beim Ladeschritt, da nur dann eine Verminderung der optischen Transparenz der elektrochromen Vorrichtung 2 erreicht werden kann.

Falls weiterhin keine elektrische Gleichspannung bzw. kein elektrischer Strom an den beiden Vorrichtungsanschlüssen 9, 10 gemessen wird, werden die Polklemmen 14, 16 der ersten Leistungsquelle 12 so mit den Vorrichtungsanschlüssen 9, 10 elektrisch leitend verbunden, dass deren Polarität zur Polarität der Polklemmen 14, 16 beim Ladeschritt umgekehrt ist. Wurde beim Ladeschritt beispielsweise der erste Vorrichtungsanschluss 9 mit der ersten Polklemme 14 und der zweite Vorrichtungsanschluss 10 mit der dritten Polklemme 16 elektrisch leitend verbunden, so wird nun der erste Vorrichtungsanschluss 9 mit der dritten Polklemme 16 und der zweite Vorrichtungsanschluss 10 mit der ersten Polklemme 14 elektrisch leitend verbunden. In der Schaltungsanordnung 3 wird zu diesem Zweck das erste Transistorenpaar mit dem ersten Transistor 20 und dem zweiten Transistor 21 gesperrt, während das zweite Transistorenpaar mit dem dritten Transistor 24 und dem vierten Transistor 25 auf Durchlass geschalten wird. Wurde andererseits beim Ladeschritt der erste Vorrichtungsanschluss 9 mit der dritten Polklemme 16 und der zweite Vorrichtungsanschluss 10 mit der ersten Polklemme 14 elektrisch leitend verbunden, so wird nun der erste Vorrichtungsanschluss 9 mit der ersten Polklemme 14 und der zweite Vorrichtungsanschluss 10 mit der dritten Polklemme 16 elektrisch leitend verbunden. In der Schaltungsanordnung 3 wird zu diesem Zweck das erste Transistorenpaar mit dem ersten Transistor 20 und dem zweiten Transistor 21 auf Durchlass geschalten, während das zweite Transistorenpaar mit dem dritten Transistor 24 und dem vierten Transistor 25 gesperrt wird.

Sind die Polklemmen der ersten Leistungsquelle 12 in richtiger Polung mit der elektrochromen Vorrichtung 2 verbunden, kann die optische Transparenz der elektrochromen Vorrichtung 2, gesteuert durch die Steuereinrichtung 11, in gewünschter Weise vermindert werden. Durch Umschalten des Wechselschalters 14 und Verbindung mit der zweiten Leistungsquelle 13 kann die optische Transparenz der elektrochromen Vorrichtung 2 erhöht werden.

Der erfindungsgemäße Aufbau 1 ermöglicht somit in vorteilhafter Weise eine Anpassung der Polarität der zur Verminderung der optischen Transparenz eingesetzten ersten Leistungsquelle 12 bzw. der zur Erhöhung der optischen Transparenz eingesetzten zweiten Leistungsquelle 13 an die Polarität der elektrochromen Vorrichtung 2. Auf diese Weise kann eine gewünschte Steuerung der optischen Transparenz der elektrochromen Vorrichtung 2 sichergestellt und eine Schädigung durch fehlerhaftes Beaufschlagen mit zu hoher Gleichspannung bzw. zu hohen Gleichstrom zuverlässig vermieden werden.

Obgleich in dem in Verbindung mit Fig. 1 erläuterten Ausführungsbeispiel zwei Leistungsquelle 12, 13 eingesetzt werden, wobei die erste Leistungsquelle 12 zum Vermindern der optischen Transparenz und die zweite Leistungsquelle 13 zum Erhöhen der optischen Transparenz dienen, wäre gleichermaßen denkbar, lediglich eine einzige Leistungsquelle, beispielsweise die erste Leistungsquelle 12, vorzusehen und eine Erhöhung der optischen Transparenz der elektrochromen Vorrichtung 2 durch Kurzschließen der beiden Vorrichtungsanschlüsse 9, 10 zu erreichen. Dies kann beispielsweise durch auf Durchlassschalten aller vier Transistoren erreicht werden, wobei beispielsweise in der zweiten Anschlussleitung 19 ein zusätzlicher steuerbarer Transistor vorzusehen wäre. Gleichermaßen wäre alternativ denkbar, zum Erhöhen der optischen Transparenz der elektrochromen Vorrichtung 2, mittels der Polklemmenwechselschaltung 4 die Polarität der mit den beiden Vorrichtungsanschlüssen 9, 10 elektrisch leitend verbundenen Polklemmen 14, 16 zu vertauschen, wobei in diesem Fall gegebenenfalls die maximale Ausgangsleistung zu vermindern wäre, um eine Schädigung der elektrochromen Vorrichtung 2 zu vermeiden.

### Bezugszeichenliste

- 1: Aufbau
- 2: elektrochrome Vorrichtung
- 3: Schaltungsanordnung
- 4: Polklemmenwechselschaltung
- 5: Kapazität
- 6: Diode
- 7: Leckwiderstand
- 8: Anschlusswiderstand
- 9: erster Vorrichtungsanschluss
- 10: zweiter Vorrichtungsanschluss
- 11: Steuereinrichtung
- 12: erste Leistungsquelle
- 13: zweite Leistungsquelle
- 14: erste Polklemme
- 15: zweite Polklemme
- 16: dritte Polklemme
- 17: Wechselschalter
- 18: erste Anschlussleitung
- 19: zweite Anschlussleitung
- 20: erster Transistor
- 21: zweiter Transistor
- 22: erste Brückenleitung
- 23: zweite Brückenleitung
- 24: dritter Transistor
- 25: vierter Transistor
- 26: erster Steueranschluss
- 27: zweiter Steueranschluss
- 28: dritter Steueranschluss
- 29: vierter Steueranschluss
- 30: erste Steuerleitung
- 31: zweite Steuerleitung
- 32: erster Signalausgang
- 33: zweiter Signalausgang
- 34: erster Verstärker
- 35: zweiter Verstärker
- 36: Aktuator
- 37: dritter Signalausgang
- 38: dritter Verstärker
- 39: dritte Steuerleitung
- 40: vierter Signalausgang
- 41: vierte Steuerleitung
- 42: erste Messleitung
- 43: zweite Messleitung
- 44: erster Signaleingang
- 45: zweiter Signaleingang
- 46: Spannungs-/Strommesseinrichtung
- 47: erster klemmenseitiger Abschnitt
- 48: erster anschlussseitiger Abschnitt
- 49: zweiter klemmenseitiger Abschnitt
- 50: zweiter anschlussseitiger Abschnitt

## Patentansprüche

1. Aufbau (1), umfassend eine elektrochrome Vorrichtung (2) mit zwei elektrischen Vorrichtungsanschlüssen (9, 10) und eine Schaltungsanordnung (3), wobei die Schaltungsanordnung (3) aufweist:
- eine mit den beiden Vorrichtungsanschlüssen (9, 10) verbundene Spannungs-/Strommesseinrichtung (46),
- wenigstens eine elektrische Leistungsquelle (12) mit zwei Polklemmen (14, 16), die über eine steuerbare Polklemmenwechselschaltung (4) an die beiden Vorrichtungsanschlüsse (9, 10) angeschlossen ist, wobei durch die Polklemmenwechselschaltung (4) ein Vorrichtungsanschluss wahlweise mit einer der beiden Polklemmen und zugleich der andere Vorrichtungsanschluss mit der jeweils anderen Polklemme elektrisch leitend verbunden werden kann,
- eine elektronische Steuereinrichtung (11) zur Steuerung der Polklemmenwechselschaltung (4), welche so eingerichtet ist, dass eine elektrische Spannung und/oder ein elektrischer Strom zwischen den Vorrichtungsanschlüssen (9, 10) gemessen wird und die Vorrichtungsanschlüsse (9, 10) jeweils so mit den Polklemmen (14, 16) verbunden werden, dass eine Polarität der an den Vorrichtungsanschlüssen (9, 10) gemessenen elektrischen Größe einer Polarität der elektrischen Leistungsquelle (12) entspricht.

2. Aufbau (1) nach Anspruch 1, **dadurch gekennzeichnet, dass** die Steuereinrichtung (11) so eingerichtet ist, dass der elektrochromen Vorrichtung (2) für eine wählbare Zeitspanne elektrische Leistung zugeführt wird, falls keine Spannung zwischen den Vorrichtungsanschlüssen (9, 10) messbar ist, wobei
- für den Fall, dass nach Ablauf der Zeitspanne eine elektrische Spannung und/oder ein elektrischer Strom zwischen den Vorrichtungsanschlüssen (9, 10) gemessen wird, die Vorrichtungsanschlüsse (9, 10) jeweils so mit den Polklemmen (14, 16) verbunden werden, dass eine Polarität der an den Vorrichtungsanschlüssen (9, 10) gemessenen elektrischen Größe einer Polarität der elektrischen Leistungsquelle (12) entspricht, und
- für den Fall, dass nach Ablauf der Zeitspanne keine elektrische Spannung bzw. elektrischer Strom zwischen den Vorrichtungsanschlüssen (9, 10) gemessen wird, die Vorrichtungsanschlüsse (9, 10) jeweils so mit den Polklemmen (14, 16) verbunden werden, dass die Polarität der Polklemmen gegenüber der Polarität der Polklemmen beim Zuführen der elektrischen Leistung umgekehrt ist.

3. Aufbau (1) nach einem der Ansprüche 1 bis 2, **dadurch gekennzeichnet, dass** die Spannungs-/Strommesseinrichtung (46) in die Steuereinrichtung (11) integriert ist.

4. Aufbau (1) nach einem der Ansprüche 1 bis 3, **dadurch gekennzeichnet, dass** die Polklemmenwechselschaltung (4) umfasst:
- eine erste Anschlussleitung (18), durch welche eine erste Polklemme (14) der Leistungsquelle (12) mit einem ersten Vorrichtungsanschluss (9) elektrisch leitend verbindbar ist,
- eine zweite Anschlussleitung (19), durch welche eine zweite Polklemme (15) der Leistungsquelle (12) mit einem zweiten Vorrichtungsanschluss (10) elektrisch leitend verbindbar ist,
- ein erstes Transistorenpaar mit einem ersten Transistor (20) und einem zweiten Transistor (21), wobei ein Lastpfad des ersten Transistors (20) die erste Anschlussleitung (18) in einen ersten klemmenseitigen Abschnitt (47) und einen ersten anschlussseitigen Abschnitt (48) und ein Lastpfad des zweiten Transistors (21) die zweite Anschlussleitung (19) in einen zweiten klemmenseitigen Abschnitt (49) und einen zweiten anschlussseitigen Abschnitt (50) unterteilt,
- eine erste Brückenleitung (22), durch welche der erste klemmenseitigen Abschnitt (47) mit dem zweiten anschlussseitigen Abschnitt (50) elektrisch leitend verbindbar ist,
- eine zweite Brückenleitung (23), durch welche der zweite klemmenseitigen Abschnitt (49) mit dem ersten anschlussseitigen Abschnitt (48) elektrisch leitend verbindbar ist,
- ein zweites Transistorenpaar mit einem dritten Transistor (24) und einem vierten Transistor (25), wobei ein Lastpfad des dritten Transistors (24) in der ersten Brückenleitung (22) und ein Lastpfad des vierten Transistors (25) in der zweiten Brückenleitung (23) enthalten ist, und wobei Steueranschlüsse (26-29) der Transistoren mit der elektronischen Steuereinrichtung (11) verbunden sind.

5. Aufbau (1) nach Anspruch 4, **dadurch gekennzeichnet, dass** die Steueranschlüsse (26, 27; 28, 29) der Transistoren eines jeweiligen Transistorpaars (20, 21; 24, 25) mit einem gemeinsamen Signalausgang (32, 33) der elektronischen Steuereinrichtung (11) verbunden sind.

6. Aufbau (1) nach einem der Ansprüche 1 bis 5, **dadurch gekennzeichnet, dass** er eine erste elektrische Leistungsquelle (12) und eine zweite elektrische Leistungsquelle (13) umfasst, die jeweils über die Polklemmenwechselschaltung (4) an die Vorrichtungsanschlüsse (9, 10) angeschlossen sind, wobei Polklemmen der beiden Leistungsquellen, gesteuert durch einen Wechselschalter (17), wahlweise mit den Vorrichtungsanschlüssen verbindbar sind.

7. Aufbau (1) nach Anspruch 6, **dadurch gekennzeichnet, dass** der Wechselschalter (17) von der elektronischen Steuereinrichtung (11) steuerbar ist.

8. Aufbau (1) nach einem der Ansprüche 6 bis 7, **dadurch gekennzeichnet, dass** eine maximale Ausgangsspannung bzw. ein maximaler Ausgangsstrom wenigstens einer der beiden elektrischen Leistungsquellen (12) durch die elektronische Steuereinrichtung (11) regelbar ist.

9. Aufbau (1) nach einem der Ansprüche 1 bis 8, **dadurch gekennzeichnet, dass** die elektrochrome Vorrichtung (2) eine, mit wenigstens einem transparenten Substrat versehene, elektrochrome Verglasung ist.

10. Verfahren zum Anpassen der Polarität einer elektrischen Leistungsquelle an die Polarität einer elektrochromen Vorrichtung, **gekennzeichnet durch** die folgenden Schritte:
- Messen einer elektrischen Spannung bzw. eines elektrischen Stroms zwischen Vorrichtungsanschlüssen der elektrochromen Vorrichtung mittels einer Spannungs-/Strommesseinrichtung;
- Vergleichen der Polarität der gemessenen elektrischen Größe mit der Polarität der Leistungsquelle mittels einer elektronischen Steuereinrichtung,
- elektrisches Verbinden der Vorrichtungsanschlüsse mit den Polklemmen mittels einer von der Steuereinrichtung gesteuerten Polklemmenwechselschaltung, wobei die Vorrichtungsanschlüsse so mit den Polklemmen verbunden werden, dass eine Polarität der an den Polklemmen gemessenen elektrischen Größe einer Polarität der elektrischen Leistungsquelle entspricht.

11. Verfahren nach Anspruch 10, **dadurch gekennzeichnet, dass** der elektrochromen Vorrichtung für eine wählbare Zeitspanne eine elektrische Leistung zugeführt wird, falls keine elektrische Spannung bzw. elektrischer Strom zwischen den Vorrichtungsanschlüssen messbar ist, wobei
- für den Fall, dass nach Ablauf der Zeitspanne eine elektrische Spannung bzw. elektrischer Strom zwischen den Vorrichtungsanschlüssen gemessen wird, die Vorrichtungsanschlüsse jeweils so mit den Polklemmen verbunden werden, dass eine Polarität der an den Polklemmen gemessenen Spannung einer Polarität der elektrischen Leistungsquelle entspricht, und
- für den Fall, dass nach Ablauf der Zeitspanne keine elektrische Spannung bzw. elektrischer Strom zwischen den Vorrichtungsanschlüssen gemessen wird, die Vorrichtungsanschlüsse jeweils so mit den Polklemmen verbunden werden, dass die Polarität der Polklemmen gegenüber der Polarität der Polklemmen beim Zuführen der elektrischen Leistung umgekehrt wird.

12. Verfahren zum Betreiben einer elektrochromen Vorrichtung, **dadurch gekennzeichnet, dass** vor einer Änderung der optischen Transparenz der elektrochromen Vorrichtung mittels einer elektrischen Leistungsquelle ein Verfahren zum Anpassen der Polarität der elektrischen Leistungsquelle an die Polarität der elektrochromen Vorrichtung nach einem der Ansprüche 10 bis 11 ausgeführt wird.

## Claims

1. Assembly (1), comprising an electrochromic device (2) with two electrical device connections (9, 10) and a circuit arrangement (3), wherein the circuit arrangement (3) has:
- a voltage/current measurement device (46) connected to the two device connections (9, 10),
- at least one electrical power source (12) with two pole terminals (14, 16), which is connected via a controllable pole terminal two-way circuit (4) to the two device connections (9, 10), wherein, selectively, one device connection can be electrically conductively connected by the pole terminal two-way circuit (4) to one of the two pole terminals and, at the same time, the other device connection can be connected to the respective other pole terminal,
- an electronic control device (11) for controlling the pole terminal two-way circuit (4), which is configured such that an electrical voltage and/or an electrical current is measured between the device connections (9, 10) and the device connections (9, 10) are in each case connected to the pole terminals (14, 16) such that a polarity of the electrical variable measured on the device connections (9, 10) corresponds to a polarity of the electrical power source (12).

2. Assembly (1) according to claim 1, **characterized in that** the control device (11) is configured such that electrical power is fed to the electrochromic device (2) for a selectable time interval, if no voltage is measurable between the device connections (9, 10), wherein
- for the case that after expiration of the time interval, an electrical voltage and/or an electrical current is measured between the device connections (9, 10), the device connections (9, 10) are in each case connected to the pole terminals (14, 16) such that a polarity of the electrical variable measured on the device connections (9, 10) corresponds to a polarity of the electrical power source (12), and
- for the case that after expiration of the time no electrical voltage or electrical current is measured between the device connections (9, 10), the device connections (9, 10) are in each case connected to the pole terminals (14, 16) such that the polarity of the pole terminals is reversed relative to the polarity of the pole terminals during the feeding of the electrical power.

3. Assembly (1) according to one of claims 1 through 2, **characterized in that** the voltage/current measurement device (46) is integrated into the control device (11).

4. Assembly (1) according to one of claims 1 through 3, **characterized in that** the pole terminal two-way circuit (4) comprises:
- a first connection line (18), by which a first pole terminal (14) of the power source (12) is electrically conductively connectable to a first device connection (9),
- a second connection line (19), by which a second pole terminal (15) of the power source (12) is electrically conductively connectable to a second device connection (10),
- a first transistor pair with a first transistor (20) and a second transistor (21), wherein a load path of the first transistor (20) divides the first connection line (18) into a first terminal-side section (47) and a first connector-side section (48) and a load path of the second transistor (21) divides the second connection line (19) into a second terminal-side section (49) and a second connector-side section (50),
- a first bridge line (22), by which the first terminal-side section (47) is electrically conductively connectable to the second connector-side section (50),
- a second bridge line (23), by which the second terminal-side section (49) is electrically conductively connectable to the first connector-side section (48),
- a second transistor pair with a third transistor (24) and a fourth transistor (25), wherein a load path of the third transistor (24) is included in the first bridge line (22) and a load path of the fourth transistor (25) is included in the second bridge line (23), and wherein control connectors (26-29) of the transistors are connected to the electronic control device (11).

5. Assembly (1) according to claim 4, **characterized in that** the control connectors (26, 27; 28, 29) of the transistors of one respective transistor pair (20, 21; 24, 25) are connected to a common signal output (32, 33) of the electronic control device (11).

6. Assembly (1) according to one of claims 1 through 5, **characterized in that** it includes a first electrical power source (12) and a second electrical power source (13), which are in each case connected via the pole terminal two-way circuit (4) to the device connections (9, 10), wherein pole terminals of the two power sources are, controlled by a two-way switch (17), selectively connectable to the device connections.

7. Assembly (1) according to claim 6, **characterized in that** the two-way switch (17) is controllable by the electronic control device (11).

8. Assembly (1) according to one of claims 6 through 7, **characterized in that** a maximum output voltage or a maximum output current of at least one of the two electrical power sources (12) can be regulated by the electronic control device (11).

9. Assembly (1) according to one of claims 1 through 8, **characterized in that** the electrochromic device (2) is an electrochromic glazing provided with at least one transparent substrate.

10. Method for adapting the polarity of an electrical power source to the polarity of an electrochromic device, **characterized by** the following steps:
- Measurement of an electrical voltage or an electrical current between device connections of the electrochromic device by means of a voltage/current measurement device;
- Comparison of the polarity of the electrical variable measured to the polarity of the power source by means of an electronic control device,
- Electrical connection of the device connections to the pole terminals by means of a pole terminal two-way circuit controlled by the control device, wherein the device connections are connected to the pole terminals such that a polarity of the electrical variable measured on the pole terminals corresponds to a polarity of the electrical power source.

11. Method according to claim 10, **characterized in that** electrical power is fed to the electrochromic device for a selectable time interval, if no electrical voltage or electrical current is measurable between the device connections, wherein
- for the case that, after expiration of the time interval, an electrical voltage or electrical current is measured between the device connections, the device connections are in each case connected to the pole terminals such that a polarity of the voltage measured on the pole terminals corresponds to a polarity of the electrical power source, and
- for the case that, after expiration of the time interval, no electrical voltage or electrical current is measured between the device connections, the device connections are in each case connected to the pole terminals such that the polarity of the pole terminals is reversed relative to the polarity of the pole terminals during feeding of the electrical power.

12. Method for operating an electrochromic device, **characterized in that** before a change of the optical transparency of the electrochromic device by means of an electrical power source, a method for adapting the polarity of the electrical power source to the polarity of the electrochromic device according to one of claims 10 through 11 is performed.

## Revendications

1. Montage (1) comprenant un dispositif électrochrome (2) muni de deux connexions de dispositif (9, 10) et une structure de circuit (3), la structure de circuit (3) présentant :
- un dispositif de mesure de tension/courant (46) relié aux deux connexions de dispositif (9, 10) ;
- au moins une source de puissance électrique (12) munie de deux bornes polaires (14, 16), qui est connectée aux deux connexions de dispositif (9, 10) par l'intermédiaire d'un circuit (4) d'inversion des bornes polaires pouvant être commandé, une connexion de dispositif pouvant être reliée électriquement sélectivement à l'une des deux bornes polaires, et l'autre connexion de dispositif en même temps reliée électriquement à l'autre borne polaire, par le circuit (4) d'inversion de bornes polaires ;
- un dispositif de commande électronique (11) qui est destiné à commander le circuit (4) d'inversion des bornes polaires et qui est conçu de manière qu'une tension électrique et/ou un courant électrique soit ou soient mesuré(s) entre les connexions de dispositif (9, 10) et que les connexions de dispositif (9, 10) soient respectivement reliées aux bornes polaires (14, 16) de manière qu'une polarité de la grandeur électrique mesurée aux connexions de dispositif (9, 10) corresponde à une polarité de la source de puissance électrique (12).

2. Montage (1) selon la revendication 1, **caractérisé par le fait que** le dispositif de commande (11) est conçu de manière que de la puissance électrique soit appliquée au dispositif électrochrome (2) pendant un laps de temps pouvant être choisi, dans le cas où aucune tension ne peut être mesurée entre les connexions de dispositif (9, 10), où
- dans le cas où, après écoulement du laps de temps, une tension électrique et/ou un courant électrique est ou sont mesuré(s) entre les connexions de dispositif (9, 10), les connexions de dispositif (9, 10) sont reliées respectivement aux bornes polaires (14, 16) de manière qu'une polarité de la grandeur électrique mesurée aux connexions de dispositif (9, 10) corresponde à une polarité de la source de puissance électrique (12), et
- dans le cas où, après écoulement du laps de temps, aucune tension électrique ni aucun courant électrique n'est mesuré entre les connexions de dispositif (9, 10), les connexions de dispositif sont reliées respectivement aux bornes polaires (14, 16) de manière que la polarité des bornes polaires soit inversée par rapport à la polarité des bornes polaires existant lors de l'application de la puissance électrique.

3. Montage (1) selon l'une des revendications 1 à 2, **caractérisé par le fait que** le dispositif de mesure de tension/courant (46) est intégré dans le dispositif de commande (11).

4. Montage (1) selon l'une des revendications 1 à 3, **caractérisé par le fait que** le circuit (4) d'inversion de bornes polaires comprend :
- un premier conducteur de connexion (18) par lequel une première borne polaire (14) de la source de puissance (12) est apte à être reliée électriquement à une première connexion de dispositif (9) ;
- un second conducteur de connexion (19) par lequel une seconde borne polaire (15) de la source de puissance (12) est apte à être reliée électriquement à une seconde connexion de dispositif (10) ;
- une première paire de transistors comprenant un premier transistor (20) et un deuxième transistor (21 où un trajet de charge du premier transistor (20) divise le premier conducteur de connexion (18) en un premier segment côté borne (47) et un premier segment côté connexion (48) et un trajet de charge du deuxième transistor (21) divise le second conducteur de connexion (19) en un second segment côté borne (49) et un second segment côté connexion (50) ;
- un premier conducteur de pont (22) par lequel le premier segment côté borne (47) est apte à être relié électriquement au second segment côté connexion (50) ;
- un second conducteur de pont (23) par lequel le second segment côté borne (49) est apte à être relié électriquement au premier segment côté connexion (48) ;
- une seconde paire de transistors comprenant un troisième transistor (24) et un quatrième transistor (25), où un trajet de charge du troisième transistor (24) est contenu dans le premier conducteur de pont (22) et un trajet de charge du quatrième transistor (25) est contenu dans le second conducteur de pont (23), et des connexions de commande (26-29) des transistors sont reliées au dispositif de commande électronique (11).

5. Montage (1) selon la revendication 4, **caractérisé par le fait que** les connexions de commande (26, 27 ; 28, 29) des transistors d'une paire de transistors respective (20, 21 ; 24, 25) sont reliées à une sortie de signal commune (32, 33) du dispositif de commande électronique (11).

6. Montage (1) selon l'une des revendications 1 à 5, **caractérisé par le fait qu'**il comprend une première source de puissance électrique (12) et une seconde source de puissance électrique (13) qui sont connectées respectivement aux connexions de dispositif (9, 10) au moyen du circuit (4) d'inversion de bornes polaires, les bornes polaires des deux source de puissance étant aptes à être reliées sélectivement aux connexions de dispositif sous l'effet de la commande d'un commutateur inverseur (17).

7. Montage (1) selon la revendication 6, **caractérisé par le fait que** le commutateur inverseur (17) est apte à être commandé par le dispositif de commande électronique (11).

8. Montage (1) selon l'une des revendications 6 à 7, **caractérisé par le fait qu'**une tension de sortie maximum ou un courant de sortie maximum d'au moins l'une des deux sources de puissance électrique (12) est apte à être réglé par le dispositif de commande électronique (11).

9. Montage (1) selon l'une des revendications 1 à 8, **caractérisé par le fait que** le dispositif électrochrome (2) est un vitrage électrochrome comprenant au moins un substrat transparent.

10. Procédé pour adapter la polarité d'une source de puissance électrique à la polarité d'un dispositif électrochrome, **caractérisé par** les étapes suivantes :
- mesure d'une tension électrique ou d'un courant électrique entre des connexions de dispositif du dispositif électrochrome au moyen d'un dispositif de mesure de tension/courant ;
- comparaison de la polarité de la grandeur électrique mesurée à la polarité de la source de puissance au moyen d'un dispositif de commande électronique ;
- mise en liaison électrique des bornes de dispositif avec les bornes polaires au moyen d'un circuit inverseur des bornes polaires commandé par le dispositif de commande, les connexions de dispositif étant reliées aux bornes polaires de manière qu'une polarité de la grandeur électrique mesurée aux bornes polaires corresponde à la polarité de la source de puissance électrique.

11. Procédé selon la revendication 10, **caractérisé par le fait qu'**une puissance électrique est appliquée au dispositif électrochrome pendant un laps de temps pouvant être choisi, dans le cas où aucune tension électrique ni aucun courant électrique ne peut être mesuré entre les connexions de dispositif, où
- dans le cas où, après écoulement du laps de temps, une tension électrique ou un courant électrique est mesuré entre les connexions de dispositif, les connexions de dispositif sont reliées respectivement aux bornes polaires de manière qu'une polarité de la tension mesurée aux bornes polaires corresponde à une polarité de la source de puissance électrique ; et
- dans le cas où, après écoulement du laps de temps, aucune tension électrique ni aucun courant électrique n'est mesuré entre les connexions de dispositif, les connexions de dispositif sont reliées respectivement aux bornes polaires de manière que la polarité des bornes polaires soit inversée par rapport à la polarité des bornes polaires existant lors de l'application de la puissance électrique.

12. Procédé d'utilisation d'un dispositif électrochrome, **caractérisé par le fait qu'**avant de modifier la transparence optique du dispositif électrochrome au moyen d'une source d'énergie électrique, on met en oeuvre un procédé d'adaptation de la polarité de la source de puissance électrique à la polarité du dispositif électrochrome selon l'une des revendications 10 à 11.
